# EUROPÄISCHE PATENTSCHRIFT

(11) **EP 2 726 265 B1**
(45) Veröffentlichungstag und Bekanntmachung des Hinweises auf die Patenterteilung: **10.02.2016**
(21) Anmeldenummer: 12729940.2
(22) Anmeldetag: 15.06.2012
(51) Int. Cl.: B29C 45/00, B29C 45/16, B29C 45/04

(54) **VORRICHTUNG UND VERFAHREN ZUR HERSTELLUNG VON SPRITZGIESSTEILEN MIT UNTERSCHIEDLICHEN KOMPONENTEN**
DEVICE AND METHOD FOR PRODUCING INJECTION-MOLDED PARTS WHICH COMPRISE DIFFERENT COMPONENTS
DISPOSITIF ET PROCÉDÉ DE PRODUCTION DE PIÈCES MOULÉES PAR INJECTION COMPRENANT DIFFÉRENTS COMPOSANTS

(30) Priorität: 30.06.2011 CH 10972011
(43) Veröffentlichungstag der Anmeldung: 07.05.2014
(73) Patentinhaber: FOBOHA GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2012/061426
(87) Internationale Veröffentlichungsnummer: WO 2013/000734

(56) Entgegenhaltungen:
- WO-A2-2004/103676
- WO-A2-2009/080827
- Menges, G.; Michaeli, W.; Mohren, P.: "Kapitel 13: Spezielle Werkzeuge zur Steigerung der Wirtschaflichkeit", Buch: Spritzgiesswerkzeuge , 28. September 2007 (2007-09-28), Seiten 559-577, XP002689374, ISBN: 3-446-40601-8 Gefunden im Internet: URL:http://files.hanser.de/hanser/docs/200 70928_2792813211-106_978-3-446-40601-8_Les eprobe.pdf [gefunden am 2012-12-17]

## Beschreibung

Die vorliegende Erfindung betrifft ein Verfahren und eine Vorrichtung zum Spritzgiessen und Montieren von Kunststoffteilen aus mehreren Kunststoffkomponenten, insbesondere eine Spritzgiessvorrichtung mit einem drehbaren Würfelwerkzeug, nach dem Oberbegriff der unabhängigen Ansprüche.

Aus dem Stand der Technik sind Spritzgiessvorrichtungen zum Spritzgiessen mit einem oder mehreren drehenden Mittelformteilen, meist in Form eines Würfels, bekannt. Diese werden z. B. zur effizienten Herstellung von mehrkomponentigen Kunststoffteilen verwendet.

In der EP1155802 ist eine Spritzgiessmaschine mit zwei Trennebenen und einem Wendesystem gezeigt, das zwischen einer feststehenden und einer beweglichen Formaufspannplatte angeordnet ist und einen mittleren Drehblock mit Kavitätenhälften an den Seitenflächen aufweist. Der mittlere Drehblock ist durch eine untere und eine obere Haltevorrichtung zwischen den Formaufspannplatten gehalten und um eine vertikale Achse drehbar. Die Haltevorrichtungen sind an Holmen der Spritzgiessmaschine geführt. Um das Gewicht des mittleren Formteils zu kompensieren kann die untere Haltevorrichtung auf dem Maschinenbett der Spritzgiessmaschine abgestützt sein. Durch Einspritzstationen wird eine Kunststoffkomponente in Kavitäten zwischen Kavitätenhälften an den Formaufspannplatten und dem Drehblock gespritzt, so dass Spritzgussteile entstehen. Nach dem Einspritzen können die Spritzgussteile am Drehblock verbleiben und in eine um 90° gedrehte Position zum Auskühlen und Auswerfen gedreht werden.

Aus der WO 2009/080827 ist eine Spritzgiessvorrichtung mit einer seitlich an einem Drehblock angeordneten Bearbeitungsvorrichtung bekannt, die zur Bearbeitung oder Manipulation von Teilen oder Zwischenprodukten vorgesehen ist, die in einer ersten oder zweiten Trennebene hergestellt wurden und am Drehblock anhaften. Die Bearbeitungsvorrichtung kann an einer Traverse oder an einem Halterahmen der Spritzgiessvorrichtung angebracht sein und wird beim Verfahren des Drehblocks mit bewegt. Ferner kann die Bearbeitungsvorrichtung am Halterahmen in mindestens einer Richtung beweglich angeordnet sein, so dass sie gegenüber dem Drehblock positioniert werden kann. Die Bearbeitungsvorrichtung kann z. B. durch eine Verdeckelungsvorrichtung gegeben sein oder es können weitere Teile zugeführt werden und mit der Bearbeitungsvorrichtung an den Spritzgiessteilen angesetzt werden. Die Herstellung von Kunststoffteilen aus mehreren unterschiedlichen Kunststoffkomponenten ist bei dieser Spritzgiessvorrichtung nicht vorgesehen.

In der WO2004/103676 wird ebenfalls die Herstellung von Spritzgiessteilen aus mehreren Teilelementen in einer Spritzgiessvorrichtung mit Würfeltechnik gezeigt. In einem ersten Verfahrensbereich werden zwei Teilelemente in Kavitäten hergestellt, die zwischen äusseren ersten Formhälften und zweiten Formhälften an einem Drehwürfel ausgebildet sind. Anschliessend wird der Würfel mit den Teilelementen in einen zweiten Verfahrensbereich gedreht, in dem die Teilelemente mit einer Umsetzvorrichtung zusammengefügt werden. Durch weiteres Drehen kommen die zusammengefügten Teilelemente in einem dritten Verfahrensbereich zu liegen, in dem sie in einer dritten Kavität mit einem dritten Teilelement verbunden werden, wobei die Wandung der dritten Kavität bereichsweise durch das erste oder zweite Teilelement gebildet wird. Durch weiteres Drehen gelangen die zusammengefügten Teilelemente in einen vierten Verarbeitungsbereich, in dem sie aus der Spritzgiessvorrichtung entnommen werden. Bei der Herstellung von Kunststoffteilen mit einer solchen Spritzgiessvorrichtung sind zu beiden Seiten der Vorrichtung zusätzliche Bearbeitungseinheiten notwendig, welche zur Handhabung der Spritzgiessteile während der Herstellung erforderlich sind.

Die DE 102006016200 beschreibt ein Verfahren zur Herstellung von mehrkomponentigen Kunststoff-Formteilen, wobei mit zwei äusseren Formaufspannplatten mit äusseren Kavitätenhälften und einem mittleren drehbaren Formträgerelement mit mindestens vier Kavitätenhälften in zwei Trennebenen Kavitäten gebildet werden, in die KunststoffSchmelzen eingespritzt werden. Dabei werden in einem ersten Schritt in den beiden Trennebenen in ersten Kavitäten Vorspritzlinge unterschiedlicher Bauteile gefertigt. Anschliessend wird das Formträgerelement gedreht und es werden neue Kavitäten mit anderen Kavitätenhälften des Formträgerelements gebildet, wobei die Vorspritzlinge in den äusseren Kavitätenhälften der äusseren Formaufspannplatten verbleiben. In einem zweiten Schritt werden die Vorspritzlinge mit einer PUR-Giesshaut überzogen. Neben der Spritzgiessvorrichtung ist ein Robotersystem angeordnet, das Greifer- und Vorbehandlungseinheiten umfasst, mit welchen z. B. Trennmittel auf die Oberflächen von Formhälften aufgetragen oder die fertigen Bauteile entnommen werden können. Dabei werden die verschiedenen Bauteile an unterschiedlichen Seiten des drehbaren Formträgerelements fertig gestellt, wodurch eine Entnahme und Weiterverarbeitung der Bauteile erschwert wird. Ferner müssen zu beiden Seiten der Spritzgiessvorrichtung Greifer vorgesehen sein, die zwischen die Kavitätenhälften eingreifen, um die Bauteile zu entnehmen.

Ähnliches gilt für eine Vorrichtung zum Entfernen von Werkstücken aus einer Spritzgiessvorrichtung nach der US 5518387. Diese beruht auf Schwenkarmen, welche bei geöffneter Spritzgiessvorrichtung von der Seite her um eine parallel zur Trennebene angeordnete Drehachse in die Trennebene eingeschwenkt werden.

Eine Aufgabe der Erfindung besteht darin, eine verbesserte Spritzgiessvorrichtung zum Spritzgiessen und Montieren von Kunststoffteilen aus mehreren Kunststoffkomponenten zu zeigen, die eine einfache und schnelle Fertigung ermöglicht sowie eine präzise Positionierung von Kunststoffteilen erleichtert.

Ferner ist es eine Aufgabe der Erfindung ein Verfahren zur Herstellung von Kunststoffteilen aus mehreren Kunststoffkomponenten bereit zu stellen, das einen flexiblen und raschen Herstellungsprozess unterstützt und eine Fertigung mit geringen Toleranzen gewährleistet.

Diese Aufgabe wird durch die in den unabhängigen Patentansprüchen definierte Spritzgiessvorrichtung und ein entsprechendes Verfahren gelöst. Vorteilhafte Ausführungsformen und verschiedene Alternativen gehen aus den Unteransprüchen hervor.

Eine Spritzgiessvorrichtung nach der vorliegenden Erfindung dient insbesondere zur Fertigung von Kunststoffteilen, die sich aus mehreren Teilelementen zusammensetzen und bei welchen zumindest eines der Teilelemente aus mehreren sich z.B. unterscheidenden Kunststoffmaterialien oder Farben, usw. besteht. Die Spritzgiessvorrichtung weist erste Kavitätenhälften und zweite Kavitätenhälften auf, die jeweils mit weiteren Kavitätenhälften an einem Mittelblock Kavitäten für die Teilelemente bilden können. Die Kavitätenhälften sind an Formaufspannplatten vorgesehen, die bei Bedarf lösbar innerhalb der Spritzgiessvorrichtung angeordnet sind. Die zweiten Kavitätenhälften sind gegenüber den ersten Kavitätenhälften entlang einer Längsachse der Spritzgiessvorrichtung in einer ersten Richtung verschiebbar. Der Mittelblock ist zwischen den ersten und den zweiten Kavitätenhälften angeordneten und um eine Achse drehbar sowie in der ersten Richtung verschiebbar vorgesehen. Der Mittelblock weist an wenigstens einer Seitenfläche mittlere Kavitätenhälften auf, die mit den ersten und den zweiten Kavitätenhälften Kavitäten in einer ersten und einer zweiten Trennebene, bzw. einer ersten und einer zweiten Schliessposition, bilden. Die ersten und zweiten Kavitätenhälften, bzw. die Formaufspannplatten, und der Mittelblock können z. B. an Holmen der Spritzgiessvorrichtung angeordnet sein und z. B. durch eine Koordinationseinrichtung relativ zu einander in und entgegen der ersten Richtung in Längsrichtung bewegt werden, um die Trennebenen zu öffnen und zu schliessen.

Die ersten Kavitätenhälften bilden mit den mittleren Kavitätenhälften erste Kavitäten zur Aufnahme einer ersten Kunststoffkomponente und zur Ausformung von Vorformlingen für ein erstes Teilelement. Die zweiten Kavitätenhälften bilden zumindest teilweise mit den in den mittleren Kavitätenhälften befindlichen Vorformlingen zweite Kavitäten zur Aufnahme einer zweiten Kunststoffkomponente und zur Ausbildung der ersten Teilelemente, nachdem die mittleren Kavitätenhälften mit der ersten Kunststoffkomponente in eine den zweiten Kavitätenhälften gegenüberliegende Position, die zweite Schliessposition, gedreht sind. In der zweiten Trennebene wird vorzugsweise eine sich von der ersten Kunststoffkomponente unterscheidende, zweite Kunststoffkomponente in die zweiten Kavitäten eingebracht.

Am Mittelblock sind dritte Kavitätenhälften angeordnet, die mit vierten Kavitätenhälften, die neben den ersten und/oder den zweiten Kavitätenhälften an der ersten oder zweiten Formaufspannplatte angeordnet sind. Die dritten Kavitätenhälften am Mittelblock und die vierten Kavitätenhälften bilden zusätzliche Kavitäten für zweite Teilelemente. Diese zweiten Teilelemente verbleiben beim Drehen des Mittelblocks von der ersten Einspritzposition oder der zweiten Einspritzposition in die Montageposition in den dritten Formhälften; ebenso wie die ersten Teilelemente in den mittleren Kavitätenhälften verbleiben. Eine Arbeitsvorrichtung ist seitlich des Mittelblocks angeordnet, d. h. die Arbeitsvorrichtung ist neben dem Mittelblock derart vorgesehen, dass sie zumindest teilweise auf einer Achse senkrecht zur Längsachse der ersten Bewegungsrichtung der Formhälften, bzw. neben dieser Längsachse liegt. Die Arbeitsvorrichtung ist also z. B. neben den Holmen der Spritzgiessvorrichtung vorgesehen. Dabei kann die Arbeitsvorrichtung auch an den Holmen oder an Haltelementen, die an den Holmen angeordnet sind, vorgesehen sein. Nachdem die mittleren und dritten Kavitätenhälften mit den ersten und zweiten Teilelementen in eine seitliche, der Arbeitsvorrichtung gegenüberliegende Montageposition gedreht sind, sind zur Herstellung von Kunststoffteilen mittels der Arbeitsvorrichtung zweite Teilelemente an den ersten Teilelementen montierbar.

Bei dem erfindungsgemässen Verfahren zur Herstellung von Kunststoffteilen aus wenigstens zwei unterschiedlichen Teilelementen mit einer solchen Spritzgiessvorrichtung werden die Vorformlinge in der ersten Trennebene in einer ersten Schliessposition in den Kavitäten zwischen den ersten Kavitätenhälften und den mittleren Kavitätenhälften gefertigt und verbleiben nach einem Öffnen der Kavitätenhälften der ersten Trennebene am Mittelblock, bzw. an den mittleren Formhälften. Anschliessend wird der Mittelblock durch eine geeignete Drehvorrichtung direkt oder indirekt in eine den zweiten Kavitätenhälften gegenüber liegende Position, also in die zweite Trennebene und in die zweite Schliessposition gebracht. Der Mittelblock wird hierzu aus seiner Ausgangsposition (erste Einspritzposition, bzw. Schliessposition), in der die mittleren Kavitätenhälften den ersten Kavitätenhälften gegenüber liegen, um in einem oder mehreren Schritten 180° in einer ersten Drehrichtung gedreht, so dass sich der Mittelblock in einer zweiten Einspritzposition, bzw. Schliessposition, befindet. In der zweiten Schliessposition bilden die zweiten Kavitätenhälften zumindest teilweise mit den in den mittleren Kavitätenhälften befindlichen Vorformlingen zweite Kavitäten und es wird eine zweite Kunststoffkomponente in diese zweiten Kavitäten eingespritzt, die an den Vorformlingen angebracht wird, so dass erste Teilelemente hergestellt werden. Die zweite Kunststoffkomponente haftet an der ersten Kunststoffkomponente und beide Komponenten gemeinsam bilden die ersten Teilelemente der Kunststoffteile. Beim Öffnen der zweiten Trennebenen verbleiben die ersten Teilelemente an dem Mittelblock, bzw. den mittleren Formhälften, und werden durch weiteres Drehen des Mittelblocks in eine seitliche Position gedreht, vorzugsweise in der ersten Drehrichtung, wie bei der Drehung des Mittelblocks aus der ersten Einspritzposition in die zweite Einspritzposition. D. h. der Mittelblock wird relativ zur Ausgangsposition, in der die ersten Kavitäten ausgebildet wurden, um 270° gedreht und befindet sich dann in der seitlichen Position, in der die mittleren Kavitätenhälften der Arbeitsvorrichtung gegenüber liegen. Diese Position entspricht einer Montageposition. Die Seitenfläche des Mittelblocks, an welcher die fertigen ersten Teilelemente gehalten sind, weist somit senkrecht zur Bewegungsrichtung der Kavitätenhälften nach aussen und in Richtung der Arbeitsvorrichtung.

Die Vorformlinge können die zweiten Kavitäten auf Seiten des Mittelblocks vollständig abgrenzen, so dass sie die zweiten Kavitätenhälften an der beweglichen Formaufspannplatte vollständig abschliessen. Oder es können Bereiche der mittleren Kavitätenhälften ebenfalls zur Ausbildung der Kavitäten beitragen, so dass die Kavitäten an der zweiten Trennebene von den Vorformlingen, Bereichen der mittleren Kavitätenhälften und den zweiten Kavitätenhälften gebildet werden.

Die zweiten Teilelemente werden in den zusätzlichen Kavitäten zwischen dem Mittelblock und der ersten oder zweiten Formaufspannplatte in der ersten oder zweiten Schliessposition hergestellt. Hierfür bilden die dritten Kavitätenhälften am Mittelblock mit den vierten Kavitätenhälften an der der ersten oder zweiten Formaufspannplatte die zusätzlichen Kavitäten. Vorzugsweise werden die zweiten Teilelemente in der ersten Schliessposition aus dem gleichen Material gefertigt, wie die Vorformlinge, und in der zweiten Schliessposition aus dem zweiten Material, das auf die Vorformlinge aufgebracht wird. Die Arbeitsvorrichtung montiert die ersten und die zweite Teilelemente zur Herstellung der Kunststoffteile und löst die Kunststoffteile aus den Formhälften am Mittelblock.

Bei einer Spritzgiessvorrichtung und einem Verfahren nach der vorliegenden Erfindung können zunächst die einzelnen Arbeitsschritte zum Spritzgiessen von Vorformlingen und Teilelementen abgeschlossen werden. Dadurch kann die Fertigung aller Teilelemente erfolgen, ohne dass sie durch weitere Arbeitsschritte unterbrochen wird und zusätzlich Aufwand zur Steuerung derartiger Arbeitsschritte notwendig ist. Ein Zusammensetzen der verschiedenen Teilelemente kann seitlich der Bewegungsrichtung der Kavitätenhälften der Spritzgiessvorrichtung erfolgen, nachdem alle Teile hergestellt sind. Es ist nicht erforderlich, an unterschiedlichen Seiten des Mittelblocks, bzw. der Spritzgiessvorrichtung unterschiedliche Arbeitsmaschinen zur Zwischenverarbeitung von Rohlingen vorzusehen. Dadurch wird der Ablauf im Fertigungsprozess vereinfacht und beschleunigt. Ferner können bei der Fertigung der Teilelemente die Toleranzen zwischen den Teilelementen und beim Zusammensetzen der Teilelemente verringert werden, so dass Kunststoffteile von hoher Präzision gefertigt werden können. Fall erforderlich kann die Montage nach einer geordneten Entnahme auch extern erfolgen.

In einer Ausführungsform können die ersten und vierten Kavitätenhälften an einer ersten Formaufspannplatte ausgebildet sein und auf dieser z. B. in diagonal versetzt zu einander angeordneten, regelmäßigen Reihen vorgesehen sein. Die unterschiedlichen Kavitätenhälften können entlang von rechteckigen, insbesondere quadratischen, Rastern auf den Aufspannplatten verteilt sein, wobei sich die Kavitätenhälften für erste und zweite Teilelemente entlang einer Reihe oder Diagonale des Rasters abwechseln. Die mittleren und die dritten Kavitätenhälften auf der Seitenfläche des Mittelblocks sind komplementär zu den ersten, bzw. zweiten, und den vierten Kavitätenhälften angeordnet. Zum Halten der ersten und zweiten Teilelemente weisen die mittleren und dritten Kavitätenhälften z. B. eine Passform oder einen Haltesitz zum Halten der Teilelemente auf, die geeignet sind, die Trennebenen derart zu öffnen, dass die Teilelemente in dieser Passform gehalten werden. Die ersten und zweiten Teilelemente sind lösbar in ihrer jeweiligen Passform aufgenommen.

Auf Grund der oben beschriebenen Verteilung der mittleren und dritten Kavitätenhälften sind jeweils erste Teilelemente benachbart zu zweiten Teilelementen in einem vordefinierten regelmässigen Abstand angeordnet. Zwei zusammengehörende Teilelemente zur Ausbildung eines Kunststoffteils sind demnach alternierend zu einander in regelmässigen Abständen angeordnet.

Zusätzlich zu den Kavitätenhälften für die ersten und zweiten Teilelemente der Kunststoffteile können weitere Kavitätenhälften vorgesehen werden, um weitere Teilelemente der Kunststoffteile zu fertigen, falls ein Kunststoffteil mit mehr als zwei Teilelementen herzustellen ist. Wesentlich ist dabei, dass alle Teilelemente an der gleichen Seitenfläche des Mittelblocks verbleiben, bis sich die Seitenfläche gegenüber der Arbeitsvorrichtung befindet und somit in der Montageposition ist.

Die Arbeitsvorrichtung kann beweglich an der Spritzgiessvorrichtung gehalten werden oder sie ist als z. B. beweglich auf einem Maschinenbett für die Spritzgiessvorrichtung angeordnet. Die Arbeitsvorrichtung weist z. B. eine Greifeinrichtung mit einer Vielzahl von an einer Arbeitsfläche vorgesehenen Greifelementen auf, die entsprechend der Anordnung der mittleren und dritten Kavitätenhälften angeordnet sind. Die Greifelemente sind demnach z. B. entsprechend dem Raster der Kavitätenhälften auf dem Mittelblock auf der Arbeitsfläche verteilt. Die Greifelemente können z. B. durch einfache Öffnungen oder Vertiefungen in der Arbeitsfläche gegeben sein, deren Form auf die Form der Teilelemente derart abgestimmt ist, dass die Teilelemente durch Reibschluss in den Öffnungen oder Vertiefungen gehalten werden. Mittels der Greifelemente kann die Arbeitsvorrichtung die ersten oder die zweiten Teilelemente von dem Mittelblock abnehmen und an den zweiten, bzw. ersten Teilelementen montieren. Beispielsweise können die ersten Teilelemente auf die zweiten Teilelemente aufgesteckt werden. Hierfür ist die Arbeitsvorrichtung relativ zum Mittelblock entlang des Rasters, in dem die Kavitätenhälften für die ersten und zweiten Teilelemente angeordnet sind, beweglich. Dabei ist nur der vordefinierte Abstand zwischen erstem und zweitem Teilelement zu überwinden.

Bei einer Ausführungsform der Spritzgiessvorrichtung, bei der alle Teilelemente der herzustellenden Kunststoffeile durch Kavitätenhälften gefertigt werden, die sich an der selben Seitenfläche des Mittelblocks befinden, und erste Teilelemente aus ihren Kavitätenhälften entnommen und unmittelbar auf benachbarte zweite Teilelemente montiert werden, kann eine präzise Herstellung der Kunststoffteile gewährleistet werden. Die Toleranzabweichungen bei der Positionierung der Teilelemente zu einander kann verbessert werden. Dies ist zum einen möglich, da unterschiedliche Teilelemente auf der gleichen Seitenfläche des Mittelblocks gefertigt und paarweise einander zugeordnet werden. Zum anderen erfolgt der gesamte Spritzgiessvorgang zur Herstellung der ersten und zweiten Teilelemente im Wesentlichen ohne Unterbrechung durch weitere Bearbeitungsschritte der Teilelemente und kann damit so schnell als möglich abgeschlossen werden. Die unterschiedlichen Teile können an gleicher Seite ergriffen und montiert werden. Grundsätzlich ist es aber auch denkbar den Mittelblock aus der Ausgangsposition nach einer 90° Drehung zu stoppen. In dieser Zwischenposition kann beispielsweise eine Kühlung der Vorformlinge z. B. durch eine Kühlvorrichtung erfolgen. Anschliessend wird der Mittelblock um weitere 90° in die zweite Einspritzposition gedreht.

Eine Spritzgiessvorrichtung und ein oben beschriebenes Verfahren sind vor Allem zur Herstellung von zumindest teilweise hohlen Kunststoffteilen, bzw. Teilelementen, insbesondere von Kunststoffdeckeln vorteilhaft. Beim Zusammenfügen zumindest teilweiser hohler Teilelemente zu einem Kunststoffteil kommt es auf eine Präzise Ausrichtung der Teilelemente zueinander an. Bei Kunststoffdeckeln sind geringe Toleranzen einzuhalten, um die Dichtigkeit der Deckel zu gewährleisten. Dies ist nach der Erfindung durch die vordefinierte Zuordnung der Kavitätenhälften zur Herstellung zweier Teilelemente möglich, die gemeinsam ein Kunststoffteil bilden, und durch ein schnelle Fertigstellung des Spritzgussvorgangs für die Teilelemente, wie oben beschrieben.

Eine erfindungsgemässe Vorrichtung eignet sich z.B. besonders zur Herstellung von Verschlüssen für Getränkeverpackungen. Z.B. kann ein mehrteiliger Unterteil mit einer Kappe in ein und derselben Vorrichtung kostengünstig und sehr hoher Genauigkeit einfach hergestellt werden. Hochkomplizierte und damit teure externe Montagevorrichtungen können entfallen. Bei Bedarf kann die die Vorrichtung bereits Mittel zur Qualitätskontrolle eingebaut werden. Z.B. können die ersten Teile bei 90° optisch geprüft werden. Ein weiterer Vorteil besteht darin, dass Verschlüsse vor der Entnahme bei 270° oder kurz danach auf ihre Dichtigkeit getestet werden können, z.B. indem eine Druckdifferenz angelegt wird. In einer weiteren Ausführungsform weist die Vorrichtung mehr als eine mittlere Formhälfte auf, an welche teilgefertigte Teile übergeben werden können oder die zur Vormontage von Teilen dienen.

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1: dreidimensionale schematische Darstellung einer Spritzgiessvorrichtung nach der vorliegenden Erfindung und
- Fig. 2: dreidimensionale Detailansicht D aus Figur 1.

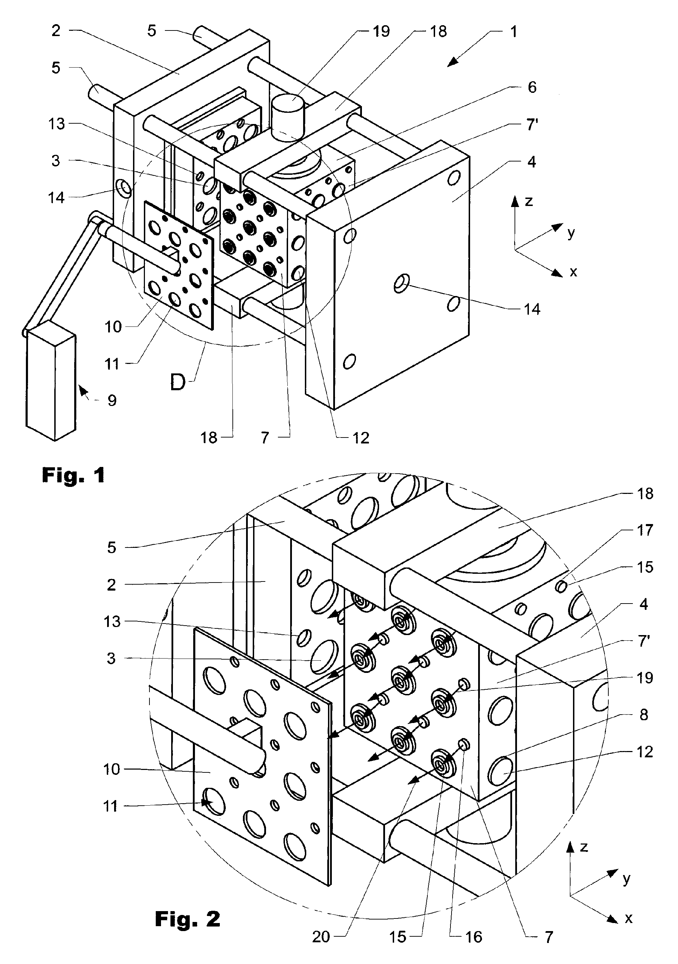

In Figur 1 ist eine Spritzgiessvorrichtung 1 gezeigt, die eine erste Formaufspannplatte 2 mit ersten Kavitätenhälften 3 und eine dieser gegenüber liegende, zweite Formaufspannplatte 4 mit zweiten Kavitätenhälften aufweist. Die Formaufspannplatten 2 und 4 sind durch Holme 5 derart miteinander verbunden, dass die zweite Formaufspannplatte 4 relativ zur ersten Formaufspannplatte 2 in einer ersten Richtung entlang der Längsachse der Spritzgiessvorrichtung verschiebbar ist; in Richtung x gemäss Figur 1. Zwischen der ersten und der zweiten Formaufspannplatte ist ein um eine Achse z drehbarer und in der ersten Richtung verschiebbarer Mittelblock 6 vorgesehen. Der Mittelblock weist vier Seitenflächen 7 auf, wobei an einer Seitenfläche mittlere Kavitätenhälften 8 und dritte Kavitätenhälften 17 angebracht sind. Der Mittelblock 6 ist mittels einer oberen und einer unteren Halteeinrichtung 18 an den oberen, bzw. unteren Holmen 5 drehbar gehalten. Zur Drehung des Mittelblocks ist an der oberen Haltevorrichtung 18 eine Drehvorrichtung 19 vorgesehen. Die Drehachse verläuft dabei senkrecht zur ersten Bewegungsrichtung der Formaufspannplatten; in Richtung z gemäss Figur 1. Zur Abstimmung der Bewegungen von erster Formaufspannplatte 2, Mittelblock 6 und zweiter Formaufspannplatte 4 relativ zu einander kann eine herkömmliche Koordinationseinrichtung verwendet werden.

Seitlich des Mittelblocks 6 ist eine Arbeitsvorrichtung 9 vorgesehen, die z. B. als mehrgliedriger Roboterarm ausgebildet sein kann. Die Arbeitsvorrichtung ist ausserhalb des von den Holmen 5 aufgespannten Spritzgiessbereichs angeordnet, also in einer Richtung y versetzt zur Bewegungsrichtung der Formaufspannplatten vorgesehen. Sie liegt in einer geöffneten Stellung der Formaufspannplatten 2 und 4 im Wesentlichen dem Mittelblock gegenüber. An ihrem der Spritzgiessvorrichtung 1 zugewandten Ende weist die Arbeitsvorrichtung eine Arbeitsfläche 10 auf, an der eine Greifeinrichtung mit mehreren Greifelementen 11 vorgesehen ist.

In einer ersten Trennebene bilden die ersten Kavitätenhälften 3 mit den mittleren Kavitätenhälften 8 erste Kavitäten, in die eine erste Kunststoffkomponente eingespritzt wird und in der Vorformlinge 12 erzeugt werden, wie sie in den Figuren an einer weiteren Seitenfläche 7' des Mittelblocks schematisch gezeigt sind. Ferner sind am Mittelblock 6 dritte Kavitätenhälften 15 und an der Formaufspannplatte 2 vierte Kavitätenhälften 13 vorgesehen, die gemeinsam Kavitäten für zweite Teilelemente bilden. In einer zweiten Trennebene bilden die Vorformlinge 12 mit den zweiten Kavitätenhälften an der Formaufspannplatte 4 zweite Kavitäten. Dabei schliessen die Vorformlinge die zweiten Kavitätenhälften ab.

An der ersten und zweiten Formaufspannplatte 2 und 4 sind jeweils Öffnungen 14 zum Anschliessen von Einspritzvorrichtungen vorgesehen, die Kunststoffkomponenten in die Kavitäten einleiten. In die ersten Kavitäten an der ersten Formaufspannplatte 2 wird eine erste Kunststoffkomponente und in die zweiten Kavitäten an der zweiten Formaufspannplatte 4 wird eine zweite Kunststoffkomponente eingeleitet, wobei die zweite Komponente mit der ersten Komponente verbunden wird, so dass erste Teilelemente entstehen.

In Figur 2 ist ein mit D bezeichneter Ausschnitt aus Figur 1 vergrössert dargestellt. Daraus ist die Verteilung der mittleren und dritten Kavitätenhälften 8 und 17 auf der Seitenfläche 7 des Mittelblocks 6 ersichtlich. Die mittleren Kavitätenhälften 8 sind gemäss einem rechtwinkligen Raster in gleichen Abständen in Reihen angeordnet. Um einen definierten Abstand sind die dritten Kavitätenhälften 17 versetzt dazu ebenfalls in einem rechtwinkligen Raster in gleichen Abständen in Reihen angeordnet, so dass die mittleren und dritten Kavitätenhälften alternierend zu einander in regelmässigen Abständen vorgesehen sind. Jeder mittleren Kavitätenhälfte 8 ist eine dritte Kavitätenhälfte 17 zugeordnet. Grundsätzlich können die Kavitätenhälften auch in anderen Geometrien, als einer rechtwinkligen Geometrie, auf der Seitenfläche 7 verteilt sein, z. B. in einem rautenartigen Raster. Die Greifelemente 11 an der Arbeitsvorrichtung 9 sind in derselben Geometrie angeordnet.

In einer Ausgangsposition, d. h. in der ersten Spritzgiessposition, des Mittelblocks werden in der ersten Trennebene die Vorformlinge 12 und die zweiten Teilelemente 15 aus der ersten Komponente hergestellt. Die Spritzgiessvorrichtung wird geöffnet, wobei die Vorformlinge 12 und die zweiten Teilelemente 15 in den mittleren und dritten Kavitätenhälften des Mittelblocks verbleiben. Der Mittelblock 6 wird in zwei Schritten um 180° in die zweite Spritzposition gedreht, in der die Seitenfläche 7 der zweiten Formaufspannplatte 4 gegenüber liegt. In Figur 2 sind Vorformlinge 12 und zweite Teilelemente 15 beispielhaft am Mittelblock auf der Seitenfläche 7' gegenüberliegend der Formaufspannplatte 4 gezeigt. Die Spritzgiessvorrichtung 1 wird geschlossen, so dass die zweiten Kavitäten ausgebildet werden. Anschliessend wird eine zweite Kunststoffkomponente in diese eingespritzt, sodass die zweiten Teilelemente 16 fertig gestellt werden. Somit ist der Vorgang des Spritzgiessens bei der Herstellung der Kunststoffkomponenten bereits abgeschlossen.

Beim Öffnen der Spritzgiessvorrichtung 1 in der zweiten Trennebene verbleiben die ersten und zweiten Teilelemente 15 und 16 in den mittleren und dritten Kavitätenhälften am Mittelblock 6. Anschliessend wird der Mittelblock um weitere 90° in der Drehrichtung gedreht, so dass die Seitenfläche 7 seitlich der Spritzgiessvorrichtung angeordnet ist und der Arbeitsvorrichtung gegenüber liegt. Diese Position entspricht einer Montageposition. Wie in Figur 2 zu sehen ist, sind die ersten und zweiten Teilelemente 15 und 1 6 in regelmässigen Abständen paarweise auf der Seitenfläche 7 des Mittelblocks 6 verteilt. Jedem ersten Teilelement 15 ist ein zweites Teilelement 16 zugeordnet.

Die Greifelemente 11 der Arbeitsvorrichtung 9 können nun die zweiten Teilelemente 16 greifen und auf die ersten Teilelemente 15 aufsetzen. Dieser Vorgang wird schematisch durch erste Pfeile 19 dargestellt. Dabei wird die Arbeitsfläche 10 um den Abstand, den zwei einander zugeordnete Teilelemente einschliessen, entlang der Seitenfläche 10 des Mittelblocks 6 verfahren. Sobald die ersten und die zweiten Teilelemente verbunden sind und somit die herzustellenden Kunststoffkomponenten fertig gestellt sind, können diese mit der Arbeitsvorrichtung vom Mittelblock abgenommen werden. Dieser Vorgang ist schematisch durch zweite Pfeile 20 dargestellt.

Anhand der Figuren wurde zu Gunsten einer guten Übersichtlichkeit die Situation an einer Seitenfläche des Mittelblocks dargestellt. Es ist jedoch vorteilhaft an allen vier Seitenflächen des Mittelblocks Formaufspannplatten mit mittleren und dritten Kavitätenhälften vorzusehen, um eine schnelle Fertig von Kunststoffteilen zu realisieren. Während in der Montageposition die zweiten Teilelemente an den ersten Teilelementen angebracht werden, können die auf der gegenüberliegenden Seitenfläche des Mittelblocks befindlichen Vorformlinge eine Auskühlphase durchlaufen.

### LISTE DER BEZUGSZEICHEN

- 1: Spritzgiessvorrichtung
- 2: erste Formaufspannplatte
- 3: erste Formhälften
- 4: zweite Formaufspannplatte
- 5: Holme
- 6: Mittelblock
- 7, 7': Seitenfläche
- 7: mittlere Formhälften
- 8: Arbeitsvorrichtung
- 9: Arbeitsfläche
- 10: Greifelemente
- 11: Vorformlinge
- 12: vierte Kavitätenhälften
- 13: Öffnungen
- 14: erste Teilelemente
- 15: zweite Teilelemente
- 16: dritte Kavitätenhälften
- 17: Halteeinrichtung
- 18: Drehvorrichtung
- 19: erste Pfeile
- 20: zweite Pfeile

## Patentansprüche

1. Spritzgiessvorrichtung (1) zur Herstellung von Kunststoffteilen aus wenigstens einem ersten und einem zweiten Teilelemente, die aufweist:
- erste Kavitätenhälften (3) und gegenüber diesen in einer ersten Richtung (x) verschiebbare zweite Kavitätenhälften,
- einen zwischen den ersten und den zweiten Kavitätenhälften angeordneten um eine Achse (z) drehbaren und in der ersten Richtung (x) verschiebbaren Mittelblock (6), der wenigstens an einer Seitenfläche (7) mittlere Kavitätenhälften (8) aufweist, wobei die ersten Kavitätenhälften (3) in einer ersten Schliessposition mit den mittleren Kavitätenhälften (8) erste Kavitäten zur Aufnahme einer ersten Kunststoffkomponente für einen Vorformling (12) ausbilden, wobei
am Mittelblock (6) dritte Kavitätenhälften (17) angeordnet sind, die mit vierten Kavitätenhälften (13), die neben den ersten und/oder zweiten Kavitätenhälften angeordnet sind, zusätzliche Kavitäten für zweite Teilelemente (16) ausbilden, und
- eine seitlich des Mittelblocks (6) angeordnete Arbeitsvorrichtung (9), **dadurch gekennzeichnet, dass** in einer zweiten Schliessposition die zweiten Kavitätenhälften zumindest teilweise mit den in den mittleren Kavitätenhälften befindlichen Vorformlingen (12) zweite Kavitäten zur Aufnahme einer zweiten Kunststoffkomponente und zur Ausbildung von ersten Teilelementen (15) bilden, und
- mittels der Arbeitsvorrichtung (9) in einer Montageposition des Mittelblocks (6) die zweiten Teilelemente (16) und die ersten Teilelementen (15) an einander montierbar sind, wobei die Montageposition in Drehrichtung des Mitteblocks (6) nach der ersten und der zweiten Schliessposition folgt.

2. Spritzgiessvorrichtung nach Anspruch 1, **dadurch gekennzeichnet, dass** die erste Schliessposition eine erste Trennebene bildet und die zweite Schliessposition eine zweite Trennebene bildet, in welcher die mittleren und dritten Kavitätenhälften (8, 17) um 180° gedreht sind.

3. Spritzgiessvorrichtung nach Anspruch 1 oder 2, **dadurch gekennzeichnet, dass** die ersten und vierten Kavitätenhälften (3, 13), bzw. die zweiten und vierten Kavitätenhälften, an einer ersten Formaufspannplatte (2), bzw. an einer gegenüber dieser in einer ersten Richtung verschiebbaren zweiten Formaufspannplatte (4), alternierend zu einander in regelmässigen Abständen angeordnet sind.

4. Spritzgiessvorrichtung nach einem der vorhergehenden Ansprüche, **dadurch gekennzeichnet, dass** die mittleren und dritten Kavitätenhälften (8, 17) eine Passform zum Halten von Teilelementen (15; 16) aufweisen.

5. Spritzgiessvorrichtung nach einem der vorhergehenden Ansprüche, **dadurch gekennzeichnet, dass** die Arbeitsvorrichtung (9) relativ zum Mittelblock (6) in Richtung der dritten, bzw. mittleren Kavitätenhälften und/oder in Richtung der ersten, bzw. zweiten Kavitätenhälften verfahrbar ist.

6. Spritzgiessvorrichtung nach einem der vorhergehenden Ansprüche, **dadurch gekennzeichnet, dass** die Arbeitsvorrichtung (9) ausserhalb von Holmen (5) vorgesehen ist, mittels welchen die Formaufspannplatten (2, 4) beweglich sind.

7. Spritzgiessvorrichtung nach einem der vorhergehenden Ansprüche, **dadurch gekennzeichnet, dass** die Arbeitsvorrichtung (9) eine Greifeinrichtung mit einer Vielzahl von an einer Arbeitsfläche (10) vorgesehenen Greifelementen (11) aufweist, die entsprechend der Anordnung der mittleren und dritten Kavitätenhälften angeordnet sind.

8. Spritzgiessvorrichtung nach einem der vorhergehenden Ansprüche, **dadurch gekennzeichnet, dass** die Kavitätenhälften Kavitäten zur Herstellung von zumindest teilweise hohlen Kunststoffteilen, bzw. Teilelementen bilden.

9. Verfahren zur Herstellung von Kunststoffteilen aus wenigstens zwei unterschiedlichen Teilelementen (15; 16) bei dem erste Kavitätenhälften (3), gegenüber diesen in einer ersten Richtung (x) verschiebbare zweite Kavitätenhälften und ein zwischen den ersten und den zweiten Kavitätenhälften angeordneter, um eine Achse (z) drehbarer und in der ersten Richtung verschiebbarer Mittelblock (6) mit mittleren Kavitätenhälften (8), die mit den ersten und den zweiten Kavitätenhälften eine erste und eine zweite Trennebene bilden, vorgesehen sind, wobei
- in der ersten Trennebene die ersten Kavitätenhälften (3) mit den mittleren Kavitätenhälften (8) erste Kavitäten bilden und eine erste Kunststoffkomponente in die ersten Kavitäten eingebracht wird, so dass Vorformlinge (12) geformt werden,
- beim Öffnen der ersten Trennebene die Vorformlinge (12) an den mittleren Kavitätenhälften (8) verbleiben und durch Drehen des Mittelblocks (6) in die zweite Trennebene gebracht werden, **dadurch gekennzeichnet, dass**
- in der zweiten Trennebene die zweiten Kavitätenhälften zumindest teilweise mit den in den mittleren Kavitätenhälften (8) befindlichen Vorformlingen (12) zweite Kavitäten bilden und eine zweite Kunststoffkomponente in die zweiten Kavitäten eingebracht und an den Vorformlingen angebracht wird, so dass erste Teilelemente (15) hergestellt werden,
- zweite Teilelemente (16) in zusätzlichen Kavitäten zwischen dritten Kavitätenhälften (17) am Mittelblock (6) und vierten Kavitätenhälften in der ersten und/oder zweiten Trennebene hergestellt werden,
- beim Öffnen der zweiten Trennebene die ersten Teilelemente (15) und die zweiten Teilelemente (16) an den mittleren Kavitätenhälften (8), bzw. den dritten Kavitätenhälften (17) verbleiben und durch Drehen des Mittelblocks (6) in eine seitliche Montageposition gedreht werden, und
- anschliessend eine seitlich des Mittelblocks (6) angeordnete Arbeitsvorrichtung (9) die Teilelementen (15; 16) zur Herstellung der Kunststoffteile aneinander montiert und die Kunststoffteile aus den Kavitätenhälften (8;17) löst.

10. Verfahren nach Anspruch 9, **dadurch gekennzeichnet, dass** die Vorformlinge (12) von der ersten Trennebene um 180° in die zweite Trennebene gedreht und von der zweiten Trennebene um weitere 90° in die seitliche Montageposition gegenüberliegend zur Arbeitsvorrichtung (9) gedreht werden.

11. Verfahren nach einem der Ansprüche 9 oder 10, **dadurch gekennzeichnet, dass** in einer ersten Schliessposition der ersten Trennebene eine erste Kunststoffkomponente und in einer zweiten Schliessposition der zweiten Trennebene eine zweite Kunststoffkomponente verarbeitet wird.

12. Verfahren nach einem der Ansprüche 9 bis 11, **dadurch gekennzeichnet, dass** die Herstellung der ersten und zweiten Teilelemente im Spritzgiessverfahren ohne Unterbrechung durch weitere Bearbeitungsschritte der Teilelemente erfolgt.

13. Verfahren nach einem der Ansprüche 9 bis 11, **dadurch gekennzeichnet, dass** die Vorformlinge (12) aus der ersten Trennebene in eine seitliche Position gedreht und dort von einer Kühlvorrichtung gekühlt werden.

## Claims

1. An injection molding device (1) for manufacturing plastic parts composed of at least one first and second sub-element, comprising:
- first cavity halves (3) and, across from same in a first direction (x) displaceable second cavity halves,
- a middle block (6) arranged between the first and second cavity halves that can be rotated about an axis (z) and is displaceable in the first direction (x) and has middle cavity halves on at least one lateral surface (7), wherein the first cavity halves (3), in a first closing position with the middle cavity halves (8), form first cavities for receiving a first plastic component for a preform (12), and
- wherein third cavity halves (17) are arranged on the middle block (6) which form, with fourth cavity halves (13) that are arranged next to the first and/or second cavity halves, additional cavities for second sub-elements (16), and
- a working device (9) arranged to the side of the middle block (6),
**characterized in that**, in a second closing position, the second cavity halves form, at least partially with the preforms (12) located in the middle cavity halves, second cavities for receiving a second plastic component and to form first sub-elements (15), and
that the second sub-elements (16) and the first sub-elements (15) can be mounted on one another by means of the working device (9) in a mounting position of the middle block (6), the mounting position following after the first and the second closing position in the direction of rotation of the middle block (6).

2. The injection molding device according to claim 1, **characterized in that** the first closing position forms a first parting plane and the second closing position forms a second parting plane on which the middle and third cavity halves (8, 17) are rotated by 180°.

3. The injection molding device according to claim 1 or 2, **characterized in that** the first and fourth cavity halves (3, 13) and the second and fourth cavity halves, respectively, are arranged so as to alternate with each other in regular intervals on a first platen (2) and on a second platen (4), respectively, that is displaceable in a first direction across from same.

4. The injection molding device according to any one of the preceding claims, **characterized in that** the middle and third cavity halves (8, 17) have a form fit for holding sub-elements (15; 16).

5. The injection molding device according to any one of the preceding claims, **characterized in that** the working device (9) can be moved relative to the middle block (6) in the direction of the third or middle cavity halves, respectively, and/or in the direction of the first or second cavity halves, respectively.

6. The injection molding device according to any one of the preceding claims, **characterized in that** the working device (9) is provided outside of tie bars (5) by means of which the platens (2, 4) can be moved.

7. The injection molding device according to any one of the preceding claims, **characterized in that** the working device (9) has a gripping device with a plurality of gripping elements (11) provided on a working surface (10) that are arranged according to the arrangement of the middle and third cavity halves.

8. The injection molding device according to any one of the preceding claims, **characterized in that** the cavity halves form cavities for manufacturing at least partially hollow plastic parts or sub-elements, respectively.

9. A method for manufacturing plastic parts composed of at least two different sub-elements (15; 16), wherein first cavity halves (3), second cavity halves that are displaceable in a first direction (x) across from same, and a middle block (6) with middle cavity halves (8), the middle block (6) arranged between the first and the second cavity halves and that can be rotated about an axis (z) and is displaceable in the first direction, which cavity halves (8) form a first and a second parting plane with the first and the second cavity halves, wherein
- on the first parting plane, the first cavity halves (3) form first cavities with the middle cavity halves (8) and a first plastic component is introduced into the first cavities, thus forming preforms (12),
- upon opening of the first parting plane, the preforms (12) remain on the middle cavity halves (8) and are brought into the second parting plane through rotation of the middle block (6), **characterized in that**
- on the second parting plane, the second cavity halves form, at least partially with the preforms (12) located in the middle cavity halves (8), second cavities, and a second plastic component is introduced into the second cavities and placed against the preforms, thus producing first sub-elements (15),
- second sub-elements (16) are manufactured in additional cavities between third cavity halves (17) on the middle block (6) and fourth cavity halves in the first and/or second parting plane,
- upon opening of the second parting plane, the first sub-elements (15) and the second sub-elements (16) remain on the middle cavity halves (8) and third cavity halves (17), respectively, and are rotated into a lateral mounting position through rotation of the middle block (6), and
- subsequently, a working device (9) arranged to the side of the middle block (6) mounts the sub-elements (15; 16) on each other to produce the plastic parts and separates the plastic parts from the cavity halves (8; 17).

10. The method according to claim 9, **characterized in that** the preforms (12) are rotated from the first parting plane by 180° into the second parting plane and, from the second parting plane, by an additional 90° into the lateral mounting position across from the working device (9).

11. The method according to claim 9 or 10, **characterized in that** a first plastic component is worked in a first closing position of the first parting plane and a second plastic component is worked in a second closing position of the second parting plane.

12. The method according to any one of claims 9 to 11, **characterized in that** the manufacture of the first and second sub-elements is performed using the injection molding process without interruption by additional processing steps of the sub-elements.

13. The method according to any one of claims 9 to 11, **characterized in that** preforms (12) are rotated out of the first parting plane into a lateral position and cooled there by a cooling device.

## Revendications

1. Dispositif de moulage par injection (1) destiné à la production de pièces en matière plastique à partir d'au moins un premier et un deuxième sous-élément, comprenant :
- des premières demi-cavités (3) et des deuxièmes demi-cavités déplaçables par rapports à celles-ci dans une première direction (x),
- un bloc central (6) disposé entre les première et deuxième demi-cavités, rotatif autour d'un axe (z), déplaçable dans la première direction (x) et comportant des demi-cavités centrales (8) au moins au niveau d'une surface latérale (7), les premières demi-cavités (3) formant dans une première position de fermeture, avec les demi-cavités centrales (8), des premières cavités destinées à recevoir un premier composant de matière plastique destiné à une préforme (12),
- des troisièmes demi-cavités (17) étant disposées au niveau du bloc central (6), lesquelles forment avec des quatrièmes demi-cavités (13), disposées à côté des premières et/ou deuxièmes demi-cavités, des cavités supplémentaires destinées à des deuxièmes sous-éléments (16), et
- un dispositif de travail (9) disposé latéralement au bloc central (6), **caractérisé en ce que**, dans une deuxième position de fermeture, les deuxièmes demi-cavités forment au moins partiellement avec les préformes, qui se trouvent dans les demi-cavités centrales (12), des deuxièmes cavités destinées à recevoir un deuxième composant de matière plastique et à former des premiers sous-éléments (15), et
- les deuxièmes sous-éléments (16) et les premiers sous-éléments (15) peuvent être montés les uns contre les autres au moyen de l'appareil de travail (9) dans une position de montage du bloc central (6), la position de montage suivant les première et deuxième positions de fermeture par référence au sens de rotation du bloc central (6).

2. Dispositif de moulage par injection selon la revendication 1, **caractérisé en ce que** la première position de fermeture forme un premier plan de séparation, et la seconde position de fermeture forme un second plan de séparation dans lequel les troisièmes demi-cavités et demi-cavités centrales (8, 17) sont entraînées en rotation sur 180°.

3. Dispositif de moulage par injection selon la revendication 1 ou 2, **caractérisé en ce que** les premières et quatrièmes demi-cavités (3, 13) respectivement les deuxièmes et quatrièmes demi-cavités, sont disposées au niveau d'une première plaque de serrage de moule (2) respectivement d'une seconde plaque de serrage de moule (4), déplaçable par rapport à la première plaque dans un première direction, de façon alternée à des distances régulières les unes par rapport aux autres.

4. Dispositif de moulage par injection selon l'une quelconque des revendications précédentes, **caractérisé en ce que** les troisièmes demi-cavités et demi-cavités centrales (8, 17) comportent un ajustement pour maintenir des sous-éléments (15 ; 16).

5. Dispositif de moulage par injection selon l'une quelconque des revendications précédentes, **caractérisé en ce que** le dispositif de travail (9) est déplaçable par rapport au bloc central (6) en direction des troisièmes demi-cavités respectivement des demi-cavités centrales et/ou en direction des premières respectivement deuxièmes demi-cavités.

6. Dispositif de moulage par injection selon l'une quelconque des revendications précédentes, **caractérisé en ce que** le dispositif de travail (9) est prévu à l'extérieur de longerons (5) au moyen desquels les plaques de serrage de moule (2, 4) sont mobiles.

7. Dispositif de moulage par injection selon l'une quelconque des revendications précédentes, **caractérisé en ce que** le dispositif de travail (9) comporte un moyen de préhension pourvu d'une pluralité d'éléments de préhension (11) qui sont prévus au niveau d'une surface de travail (10) et qui sont disposés conformément à la disposition des troisièmes demi-cavités et des demi-cavités centrales.

8. Dispositif de moulage par injection selon l'une quelconque des revendications précédentes, **caractérisé en ce que** les demi-cavités forment des cavités servant à la fabrication de pièces en matière plastique au moins partiellement creuses ou de sous-éléments au moins partiellement creux.

9. Procédé de fabrication de pièces en matière plastique à partir d'au moins deux sous-éléments différents (15 ; 16), dans lequel sont prévus des premières demi-cavités (3), des deuxièmes demi-cavités déplaçables par rapport à celles-ci dans une première direction (x) et un bloc central (6) disposé entre les premières et deuxièmes demi-cavités, rotatif autour d'un axe (z), déplaçable dans la première direction et comportant des demi-cavités centrales (8) qui forment avec les premières et deuxièmes demi-cavités des premier et second plan de séparation,
- dans le premier plan de séparation les premières demi-cavités (3) formant avec les demi-cavités centrales (8) des premières cavités et un premier composant de matière plastique étant introduit dans les premières cavités de façon à former des préformes (12),
- lors de l'ouverture du premier plan de séparation les préformes (12) restant au niveau des demi-cavités centrales (8) et étant amenées dans le second plan de séparation par rotation du bloc central (6), **caractérisé en ce que**
- dans le second plan de séparation les deuxièmes demi-cavités forment au moins partiellement avec les préformes (12), qui se trouvent dans les demi-cavités centrales (8), des deuxièmes cavités et un second composant de matière plastique est introduit dans les deuxièmes cavités et placé sur les préformes de façon à fabriquer des premiers sous-éléments (15),
- des seconds sous-éléments (16) sont fabriqués dans des cavités supplémentaires entre des troisième demi-cavités (17) au niveau du bloc central (6) et des quatrièmes demi-cavités dans le premier et/ou second plan de séparation,
- lors de l'ouverture du second plan de séparation les premiers sous-éléments (15) et les seconds sous-éléments (16) restent au niveau des demi-cavités centrales (8) respectivement des troisièmes demi-cavités (17) et sont entraînés en rotation jusque dans une position de montage latérale par rotation du bloc central (6), et
- puis un dispositif de travail (9), disposé latéralement au bloc central (6), monte les sous-éléments (15 ; 16) les uns contre les autres pour fabriquer les pièces en matière plastique et détache les pièces en matières plastique des demi-cavités (8 ; 17).

10. Procédé selon la revendication 9, **caractérisé en ce que** les préformes (12) sont entraînées en rotation sur 180° du premier plan de séparation jusque dans le second plan de séparation et sont entraînées en rotation sur autre 90° du second plan de séparation dans la position de montage latérale opposée du dispositif de travail (9).

11. Procédé selon l'une des revendications 9 ou 10, **caractérisé en ce que**, dans une première position de fermeture du premier plan de séparation, un premier composant de matière plastique est traité et, dans une seconde position de fermeture, un second composant de matière plastique est traité.

12. Procédé selon l'une des revendications 9 à 11, **caractérisé en ce que** la fabrication des premier et second sous-éléments dans le procédé de moulage par injection est effectuée sans interruption par d'autres étapes de traitement des sous-éléments.

13. Procédé selon l'une des revendications 9 à 11, **caractérisé en ce que** les préformes (12) sont entraînées en rotation du premier plan de séparation jusque dans une position latérale où elles sont refroidies par un dispositif de refroidissement.
